Europäisches Patentamt

European Patent Office

Office européen des brevets

(11) Veröffentlichungsnummer: **0 019 659**
**B1**

(12) **EUROPÄISCHE PATENTSCHRIFT**

(45) Veröffentlichungstag der Patentschrift: **26.05.82**

(21) Anmeldenummer: **79103313.7**

(22) Anmeldetag: **06.09.79**

(51) Int. Cl.³: **B 29 C 17/03**

(54) Verfahren und Gerät für die Bestimmung der Temperatur von Kunststoffolien für das Vakuumformverfahren.

(30) Priorität: **17.05.79 DE 2919950**

(43) Veröffentlichungstag der Anmeldung:
**10.12.80 Patentblatt 80/25**

(45) Bekanntmachung des Hinweises auf die Patenterteilung:
**26.05.82 Patentblatt 82/21**

(84) Benannte Vertragsstaaten:
**AT CH FR GB IT NL SE**

(56) Entgegenhaltungen:
**DE - A - 2 162 129**
**DE - B - 2 054 436**
**DE - B - 2 432 726**
**DE - B - 2 508 982**
**DE - C - 917 033**

(73) Patentinhaber: **Heinrich Wagner Maschinenfabrik GmbH & Co**
**Bahnhofstrasse 101**
**D-5928 Laasphe (DE)**

(72) Erfinder: **Grolla, Herbert, Ing. (grad.)**
**Bäderborn 2**
**D-5928 Laasphe (DE)**

(74) Vertreter: **Schlee, Richard, Dipl.-Ing. et al,**
**Bismarckstrasse 43**
**D-6300 Giessen 1 (DE)**

Courier Press, Leamington Spa, England.

# Verfahren und Gerät für die Bestimmung der Temperatur von Kunststoffolien für das Vakuumformverfahren

Die Erfindung betrifft ein Verfahren und ein Gerät für die Bestimmung der Temperatur von Folien für das Vakuumformverfahren, die an einem Rahmen befestigt sind und von der Oberseite her von einer Wärmequelle erwärmt werden.

Beim Vakuumformverfahren sind die Gießformen mit losem Sand gefüllt, wobei die Kontur für das abzugießende Gußstück von einer Kunststoffolie gebildet wird, die durch den in der Gießform herrschenden Unterdruck gegen den losen Sand gepreßt wird. Die Herstellung einer derartigen Gießform erfolgt dadurch, daß die Kunststoffolie zuvor erwärmt und anschließend auf ein Modell aufgelegt und mittels Unterdruck an dieses angesaugt wird. Hierbei ist erforderlich, daß die Kunststoffolie unmittelbar an allen Formwandungen des Modells anliegt. Während des Ansaugens der Folie wird diese also in unterschiedlichen Bereichen unterschiedlich gedehnt. Um diese relativ großen Dehnunge zu ermöglichen, muß die Folie eine ganz bestimmte Temperatur aufweisen. Es muß also die Temperatur der Folie erreicht werden, bei der ein Höchstgrad der plastischen Verformbarkeit erzielt wird. Hierbei besteht jedoch die Gefahr, die Folie zu stark zu erwärmen, so daß diese verbrennt.

Temperaturmessungen an der Folie sind sehr schwierig, da diese nicht durch ein Kontaktthermometer gemessen werden können. Die Folie ist an einem in der Regel viereckigen Rahmen durch Unterdruck angesaugt, der seinerseits höhenbeweglich ist und die Folie in die Nähe einer Wärmestation bringt und anschließend nach ausreichender Erwärmung auf das Modell absenkt. Abgesehen davon, daß es sehr schwierig ist, ein Kontaktthermometer an der Folie anzulegen, ohne diese zu zerstören, kommt hinzu, daß das Kontaktthermometer an der warmen Folie kleben bleibt, wodurch diese beim Wegnehmen des Kontaktthermometers gleichfalls zerstört werden wurde. Messungen der Wärmeabstrahlung sind ebenfalls nicht möglich, da die Folien nicht immer gleichmäßig gefärbt und mehr oder weniger durchsichtig sind, zudem wird durch die Wärmequelle, die in der Regel ein Infrarotstrahler ist, die Meßergebnisse negativ beeinflußt.

Der Erfindung liegt die Aufgabe zugrunde, ein Verfahren und ein Gerät für die Durchführung des Verfahrens vorzuschlagen, mit dem die Plastizität der Folien in einfacher Weise ermittelt werden kann.

Diese Aufgabe wird erfindungsgemäß dadurch gelöst, daß die Temperatur der Kunststoffolien in Abhängigkeit des Durchhängens der Kunststoffolie aufgrund ihres Eigengewichtes bei Erwärmen bestimmt wird. Das Maß des Durchhängens der Kunststoffolie aufgrund ihres Eigengewichtes stellt einen sehr genauen und reproduzierbaren Parameter für die Elastizität der Folie dar. Hierdurch wird die komplizierte Temperaturmessung der Folie durch eine einfache Längenmessung ersetzt. Diese Längenmessung kann z.B. mit Hilfe einer Lichtschranke oder eines scharf gebündelten Ultraschall-Strahles erfolen. Die Lichtschranke bzw. die Ultraschallgeber und Empfänger sind vorteilhaft höhenverstellbar unterhalb der Folie angeordnet, so daß diese in einfacher Weise auf verschiedene Folientemperaturen einstellbar sind. Beim Erreichen des erforderten Durchhängens der Folie wird die Folie sofort aus dem Bereich der Wärmequelle weggefahren und dem Modell zugeführt. Gleichzeitig kann die Wärmequelle abgeschaltet werden.

Ein Ausführungsbeispiel der Erfindung ist im folgenden anhand der Zeichnung näher beschrieben. In dieser zeigen:

Fig. 1 eine Seitenansicht einer erfindungsgemäßen Vorrichtung für die Erwärmung und Messung der Temperatur einer Kunststoffolie,

Fig. 2 eine Einzelheit der Fig. 1.

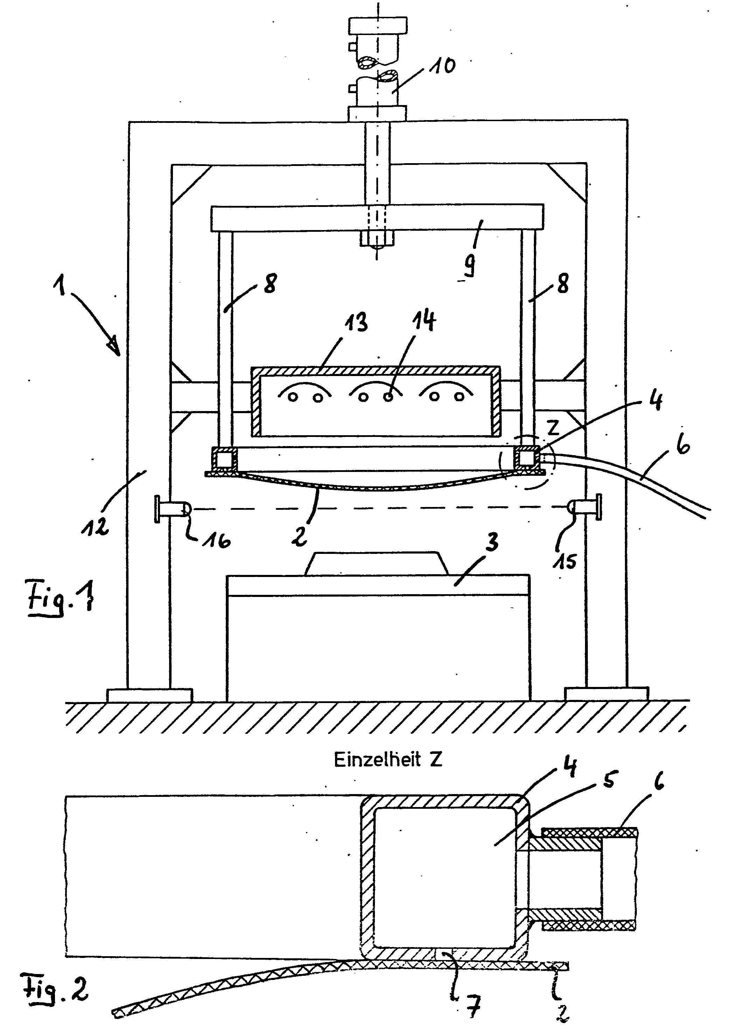

In Fig. 1 ist eine Vorrichtung 1 dargestellt für die Erwärmung und Aufbringung der Kunststoffolie 2 auf ein Modell 3.

Die Kunststoffolie 2 wird von einem geschlossenen Rahmen 4 gehalten, der, wie Fig. 2, zeigt, einen umlaufenden Kanal 5 aufweist, der über eine Schlauchleitung 6 an eine nicht dargestellte Unterdruckquelle angeschlossen ist. An der Unterseite des Kanals 5 sind über den Umfang des Rahmens 4 verteilt Öffnungen 7 vorgesehen, über die die Kunststoffolie 2 an den Rahmen angesaugt wird. Der Rahmen 4 wird von zwei Verbindungsstangen 8 getragen, die ihrerseits an einem Hubbalken 9 befestigt sind, der von einem Hydraulikzylinder 10 angehoben bzw. abgesenkt werden kann.

Der Hydraulikzylinder 10 ist an einem am Boden 11 abgestützten Rahmen 10 befestigt, an dem gleichfalls ein Heizschirm 13 angebracht ist. Im Heizschirm 13 sind Infrarotreflektoren 14 für die Erwärmung der Folie 2 angeordnet.

Seitlich am Rahmen 10 sind ein Lichtschrankensender 15 und ein Lichtschrankenempfänger 16 angebracht, die in der Höhe verstellbar sind. Innerhalb des Ständerrahmens 12 und unterhalb des Rahmens 4 für die Halterung der Kunststoffolie 2 ist das Modell 3 angebracht, an dessen Oberfläche gleichfalls Unterdruckkanäle enden, die die Aufgabe haben, die Folie 2 fest an das Modell 3 anzusaugen. Diese Kanäle sind in der Figur nicht dargestellt.

Die Arbeitsweise der Vorrichtung ist folgende. Auf dem Saugrahmen 4 wird entweder von Hand oder maschinell eine Kunststoffolie 2 derart aufgespannt, daß diese im kalten Zustand keine oder nur eine unmerkliche Durchhängung aufweist. Beim Einschalten der Infrarotstrahler 14 ist der Rahmen 4 in seiner oberen Stellung. Mit zunehmender Erwärmung der Kunststoffolie 2 hängt diese mehr und mehr durch, bis schließlich der Lichtstrahl der Lichtschranke 15, 16 unterbrochen wird. Die Unterbrechung bewirkt, daß der Rahmen 4 sofort abgesenkt und die Infrarotstrahler 14 abgeschaltet werden. Das Aufbringen der Kunststoffolie auf dem Modell erfolgt in bekannter Art un Weise. Das Maß des Durchhängens ist proportional der Temperatur der Folie und ist somit ein Maß für die Plastizität der Folie.

### Patentansprüche

1. Verfahren für die Bestimmung der Temperatur von Kunststuffolien (2) für das Vakuumformverfahren, die in kaltem Zustand an einem Rahmen (4) aufgespannt sind un von der Oberseite her von einer Wärmequelle (14) erwärmt werden, dadurch gekennzeichnet, daß die Temperatur der Kunststoffolie (2) in Abhängigkeit ihres Durchhängensaufgrund ihres Eigengewichtes beim Erwärmen bestimmt wird.

2. Verfahren nach Anspruch 1, dadurch gekennzeichnet, daß das Maß der Erwärmung mit Hilfe einer Lichtschranke oder durch Ultraschall bestimmt wird.

3. Vorrichtung zur Durchführung des Verfahrens nach Anspruch 1, dadurch gekennzeichnet, daß unterhalb der Erwärmungsstellung des Rahmens (4), für die Aufspannung der Kunststoffolie einer Lichtschranke oder ein Ultraschallgeber und -empfänger angeordnet sind.

4. Vorrichtung nach Anspruch 3, dadurch gekennzeichnet, daß die Lichtschranke (15, 16) und der Ultraschallempfänger und -geber höhenverstellbar sind.

### Claims

1. Method for determining the temperature of synthetic material sheets for the vacuum forming process, which sheets in cold condition are secured to a frame and are heated from the upper side from a heat source, characterized in that the temperature of the synthetic material sheet (2) is determined in dependence on its sagging when heated (on account of its own weight).

2. Method according to claim 1, characterized in that the amount of the heating is determined with the aid of a light boundary (15, 16) or by means of ultrasonics.

3. Apparatus for carrying out the method according to claim 1, characterized in that a light boundary or an ultrasonic transmitter and receiver are disposed below the heating position of the frame (4) for the securing of the synthetic material sheet (2).

4. Apparatus according to claim 3, characterized in that the light boundary (15, 16) and the ultrasonic transmitter and receiver are adjustable as to height.

### Revendications

1. Procédé pour déterminer la température de feuilles (2) de matière synthétique pour le procédé de formage sous vide, ces feuilles étant tendues à froid sur un cadre (4) et étant chauffées sur leur face supérieure par une source de chaleur (14), procédé caractérisé en ce que la température de la feuille (2) de matière synthétique est déterminée en fonction de la flèche qu'elle prend, en raison de son propre poids, lors de son chauffage.

2. Procédé selon la revendication 1, caractérisé par le fait que le degré d'échauffement est déterminé à l'aide d'une barrière photoélectrique (15, 16), ou d'ultrasons.

3. Dispositif pour mettre en oeuvre le procédé selon la revendication 1, caractérisé en ce qu'une barrière photoélectrique ou bien un émetteur et un récepteur d'ultrasons sont disposés en dessous de la position de chauffage du cadre (4) servant à tehdre la feuille (2) de matière synthétique.

4. Dispositif suivant la revendication 3, caractérisé par le fait que la barrière photoélectrique (15, 16) ainsi que l'émetteur et le récepteur d'ultrasons sont réglables en hauteur.

0019659

Fig. 1

Fig. 2

Einzelheit Z